# FASCICULE DE BREVET EUROPEEN

(11) **EP 3 810 947 B1**
(45) Date de publication et mention de la délivrance du brevet: **15.11.2023**
(21) Numéro de dépôt: 19735220.6
(22) Date de dépôt: 14.06.2019
(51) Int. Cl.: F16D 25/08, F16D 25/10, F16D 25/12, F16D 21/06

(54) **BAGUE DE LUBRIFICATION ET MODULE D'EMBRAYAGE COMPRENANT UNE TELLE BAGUE DE LUBRIFICATION**
SCHMIERUNGSRING UND KUPPLUNGSMODUL MIT EINEM SOLCHEN SCHMIERUNGSRING
LUBRICATING RING AND CLUTCH MODULE COMPRISING SUCH A LUBRICATING RING

(30) Priorité: 19.06.2018 FR 1855352
(43) Date de publication de la demande: 28.04.2021
(73) Titulaire: VALEO EMBRAYAGES, 80009 Amiens (FR)
(72) Inventeur: DOLE, Arnaud, 95892 CERGY PONTOISE (FR); THIBAUT, François, 95892 CERGY PONTOISE (FR); VUAROQUEAUX, Guillaume, 95892 CERGY PONTOISE (FR)
(74) Mandataire: Valeo Powertrain Systems
(86) Numéro de dépôt international: PCT/EP2019/065641
(87) Numéro de publication internationale: WO 2019/243177

(56) Documents cités:
- EP-A1- 3 252 335
- WO-A1-2017/052024
- DE-A1-102011 014 778

## Description

### Domaine technique

Le contexte technique de la présente invention est celui de la circulation d'un fluide hydraulique à l'intérieur d'un module d'embrayage de véhicule automobile. Plus particulièrement, l'invention a trait à une bague de lubrification, à un ensemble comprenant une telle bague de lubrification associée à un palier de découplage, et à un module d'embrayage comprenant un tel ensemble.

### État de la technique antérieure

Durant leur fonctionnement, les mécanismes d'embrayages humides connus génèrent des efforts frictionnels afin de permettre la transmission d'un couple entre, d'une part, un arbre d'entrée entraîné en rotation par les vilebrequins d'un moteur et, d'autre part, au moins un arbre de sortie couplé en rotation à une boite de vitesses. En particulier, le couplage frictionnel est réalisé au niveau de chaque embrayage, par l'intermédiaire d'une pluralité d'éléments de friction qui permettent d'engager ou de désengager le couplage en rotation de l'arbre d'entrée avec l'un des arbres de sortie correspondant.

De manière connue, les échauffements des éléments de friction de chaque embrayage apparaissent durant une phase transitoire d'engagement frictionnel et durant laquelle il existe une vitesse de rotation différentielle non nulle entre des premiers éléments de friction couplés en rotation à l'arbre d'entrée et des deuxièmes éléments de friction couplés en rotation à l'arbre de sortie.

Afin de garantir un fonctionnement optimal et durable du mécanisme d'embrayage, et de limiter l'usure prématurée des éléments de friction, on connait notamment l'usage d'un fluide hydraulique permettant à la fois de lubrifier et de refroidir l'embrayage durant son fonctionnement. Afin d'orienter le fluide hydraulique dans une direction privilégiée vers l'embrayage correspondant, on connait notamment l'utilisation d'une bague de lubrification située radialement à l'intérieur des embrayages. La bague de lubrification est généralement située axialement entre un palier supportant les efforts radiaux du module d'embrayage et des moyeux de transmission de couple dudit module d'embrayage, conduisant à des difficultés accrues au moment du montage du module d'embrayage. Un problème connu est lié aux difficultés techniques et de manipulation pour monter la bague de lubrification sur le module d'embrayage.

Un ensemble pour module d'embrayage selon le préambule de la revendication 1 est divulgué par le document EP 3252335 A1.

La présente invention a pour objet de répondre au moins en grande partie aux problèmes précédents et de conduire en outre à d'autres avantages en proposant une nouvelle bague de lubrification pour résoudre au moins un de ces problèmes.

Un autre but de l'invention est de faciliter l'assemblage d'un tel module d'embrayage. En particulier, un but de l'invention est de permettre un pré-centrage de la bague de lubrification sur un sous-ensemble du module d'embrayage avant son insertion dans ledit module d'embrayage.

Un autre but de la présente invention est d'améliorer le centrage de la bague de lubrification lorsqu'elle est utilisée dans un module d'embrayage.

### Exposé de l'invention

Elle propose à cet effet un ensemble pour module d'embrayage selon la revendication 1.

Selon un premier aspect de l'invention, on atteint au moins l'un des objectifs précités avec une bague de lubrification destinée à être emmanchée sur un module d'embrayage en rotation autour d'un axe de rotation, ladite bague de lubrification étant délimitée radialement vers l'intérieur par un contour intérieur et, radialement vers l'extérieur, par une surface périphérique extérieure, la bague de lubrification comprenant au moins un canal de lubrification traversant ladite bague de lubrification entre ledit contour intérieur et ladite surface périphérique extérieure. Conformément à l'invention selon son premier aspect, la bague de lubrification comprend en outre une portée de pré-centrage qui s'étend en saillie par rapport à une première face latérale d'élongation radiale de la bague de lubrification, ladite portée de pré-centrage étant située radialement entre le contour intérieur et la surface périphérique extérieure.

La bague de lubrification conforme au premier aspect de l'invention a une forme cylindrique dont une génératrice est formée par l'axe de rotation : elle est destinée à être emmanchée lorsqu'elle est assemblée sur le module d'embrayage avec lequel elle collabore. En particulier, la bague de lubrification conforme au premier aspect de l'invention est destinée à être en prise avec un élément cylindrique complémentaire situé radialement à l'intérieur de son contour intérieur.

Radialement vers l'extérieur, la bague de lubrification conforme au premier aspect de l'invention s'étend sensiblement perpendiculairement à l'axe de rotation, de sorte qu'une dimension radiale de la bague de lubrification est sensiblement égale à une ouverture axiale située au niveau de l'axe de rotation et délimitée par le contour intérieur de ladite bague de lubrification.

L'au moins un canal de lubrification traversant la bague de lubrification conforme au premier aspect de l'invention permet ainsi une mise en communication fluidique entre une partie située radialement à l'intérieur de ladite bague de lubrification - destinée à collaborer avec un canal d'acheminement du fluide hydraulique situé au niveau du module d'embrayage - et une partie située radialement à l'extérieur de ladite bague de lubrification - destinée à collaborer avec une cavité logeant au moins un embrayage du module d'embrayage.

Conformément au premier aspect de l'invention, la portée de centrage de la bague de lubrification conforme au premier aspect de l'invention permet d'assembler précisément ladite bague de lubrification sur une pièce correspondante du module d'embrayage, et plus particulièrement sur un palier de découplage comme il sera décrit ultérieurement. Cette forme astucieuse de la bague de lubrification permet de faciliter les opérations d'assemblage du module d'embrayage, et notamment lors de la mise en place de ladite bague de lubrification.

La bague de lubrification conforme au premier aspect de l'invention comprend avantageusement au moins un des perfectionnements ci-dessous, les caractéristiques techniques formant ces perfectionnements pouvant être prises seules ou en combinaison :
- la portée de pré-centrage est cylindrique suivant l'axe de rotation, une face intérieure et/ou une face extérieure de ladite portée de pré-centrage étant orientées parallèlement audit axe de rotation. Alternativement, la portée de pré-centrage est conique afin de faciliter la mise en place de la bague de lubrification, une épaisseur radiale d'une extrémité distale de ladite portée de pré-centrage par rapport à la première face latérale d'élongation radiale étant inférieure à une épaisseur radiale d'une extrémité proximale de la portée de pré-centrage par rapport à ladite première face latérale d'élongation radiale ;
- la bague de lubrification comprend une portée de centrage qui s'étend axialement en saillie par rapport à une deuxième face latérale d'élongation radiale de la bague de lubrification, ladite portée de centrage étant située radialement entre le contour intérieur et la surface périphérique extérieure de ladite bague de lubrification ;
- la portée de centrage est cylindrique suivant l'axe de rotation, une face intérieure et/ou une face extérieure de ladite portée de centrage étant orientées parallèlement audit axe de rotation. Alternativement, la portée de centrage est conique afin de faciliter la mise en place de la bague de lubrification, une épaisseur radiale d'une extrémité distale de la portée de centrage par rapport à la deuxième face latérale d'élongation radiale étant inférieure à une épaisseur radiale d'une extrémité proximale de ladite portée de centrage par rapport à ladite deuxième face latérale d'élongation radiale ;
- la portée de centrage est symétrique de la portée de pré-centrage par rapport à un axe de symétrie perpendiculaire à l'axe de rotation. La portée de centrage permet ainsi de centrer un palier axial du module d'embrayage avec lequel la bague de lubrification est destinée à collaborer ;
- l'au moins un canal de lubrification de la bague de lubrification conforme au premier aspect de l'invention s'étend linéairement entre le contour intérieur et la surface périphérique extérieure. L'au moins un canal de lubrification s'étend avantageusement perpendiculaire à l'axe de rotation. Selon une variante de réalisation alternative, l'au moins un canal de lubrification forme un angle compris entre -20° et 20° par rapport à une droite perpendiculaire à l'axe de rotation, afin d'optimiser la circulation fluidique du fluide hydraulique en direction de l'embrayage correspondant du module d'embrayage avec lequel la bague de lubrification conforme au premier aspect de l'invention est destinée à collaborer ;
- l'au moins un canal de lubrification de la bague de lubrification conforme au premier aspect de l'invention s'étend axialement de manière centrée entre la première et la deuxième face latérale d'élongation radiale de la bague de lubrification ;
- l'au moins un canal de lubrification de la bague de lubrification conforme au premier aspect de l'invention comprend une pluralité de canaux de lubrification, lesdits canaux de lubrification étant angulairement répartis autour de l'axe de rotation. Cette configuration avantageuse permet d'améliorer la circulation fluidique du fluide hydraulique traversant la bague de lubrification lorsqu'elle est mise en oeuvre sur le module d'embrayage avec lequel elle est destinée à collaborer ;
- les canaux de lubrification de la bague de lubrification conforme au premier aspect de l'invention sont régulièrement angulairement répartis autour de l'axe de rotation, un angle entre deux canaux de lubrification directement adjacent étant identique pour tous lesdits canaux de lubrification. Cette configuration avantageuse permet d'améliorer la circulation fluidique du fluide hydraulique traversant la bague de lubrification lorsqu'elle est mise en oeuvre sur le module d'embrayage avec lequel elle est destinée à collaborer ;
- la surface périphérique de la bague de lubrification conforme au premier aspect de l'invention comprend une surface conique qui s'étend à partir de la première face latérale d'élongation radiale de ladite bague de lubrification ;
- la surface périphérique de la bague de lubrification conforme au premier aspect de l'invention comprend une première partie cylindrique qui s'étend à partir de la deuxième face latérale d'élongation de ladite bague de lubrification, et une deuxième partie conique qui s'étend dans le prolongement de la première partie cylindrique et en direction de la première face latérale d'élongation radiale de ladite bague de lubrification.

Selon un deuxième aspect de l'invention, il est proposé un ensemble pour module d'embrayage, ledit ensemble comprenant (i) un palier de découplage comprenant au moins une pluralité d'éléments roulants en prise entre deux bagues annulaires selon l'axe de rotation, (ii) une bague de lubrification selon l'une quelconque des revendications précédentes, dans lequel la portée de pré-centrage est en appui radial contre l'une des bagues annulaires du palier de découplage, et (iii) au moins un embrayage configuré pour pouvoir coupler en rotation sélectivement un moyeu d'entrée de couple à au moins un moyeu de sortie de couple, chaque au moins un embrayage comprenant des premiers éléments de friction couplés en rotation au moyeu d'entrée de couple et des deuxièmes éléments de friction couplés en rotation au moyeu de sortie de couple.

L'invention conforme à son deuxième aspect adresse ainsi un sous-ensemble d'un module d'embrayage comportant l'au moins un embrayage et une association de la bague de lubrification conforme au premier aspect de l'invention au palier de découplage, ladite bague de lubrification et ledit palier de découplage étant associé l'un à l'autre au travers de l'appui radial de la portée de pré-centrage de la bague de lubrification contre l'une des deux bagues annulaires du palier de découplage. En d'autres termes, lors du pré-assemblage du sous-ensemble conforme au deuxième aspect de l'invention, la bague de lubrification est pré-centrée par rapport au palier de découplage par l'intermédiaire d'un épaulement radial réalisé entre la portée de pré-centrage de la bague de lubrification d'une part et l'une des bagues annulaires du palier de découplage d'autre part. Cette configuration avantageuse permet de faciliter le montage de la bague de lubrification sur le palier de découplage, en permettant de réaliser facilement un pré-centrage. Consécutivement, l'ensemble ainsi formé peut être - à son tour - plus facilement assemblé sur un module d'embrayage comme il sera décrit ultérieurement.

L'ensemble conforme au deuxième aspect de l'invention comprend avantageusement au moins un des perfectionnements ci-dessous, les caractéristiques techniques formant ces perfectionnements pouvant être prises seules ou en combinaison :
- le moyeu d'entrée de couple est configuré pour pouvoir être couplé en rotation à un arbre moteur ;
- chaque moyeu de sortie de couple est configuré pour pouvoir être couplé en rotation à un arbre de transmission ;
- le palier de découplage comprend une bague annulaire intérieure située radialement à l'intérieur des éléments roulants par rapport à l'axe de rotation et une bague annulaire extérieure située radialement à l'extérieur desdits éléments roulants, ladite bague annulaire intérieure et ladite bague annulaire extérieure étant configurées pour contraindre radialement les éléments roulants entre elles. La bague annulaire intérieure et la bague annulaire extérieure forment ensemble une cage de roulement pour les éléments roulants du palier de découplage ;
- le palier de découplage est par exemple du type d'un roulement à billes, et préférentiellement du type d'un roulement à billes à contact oblique. À titre d'exemples non limitatifs, le palier de découplage peut être du type d'un palier axial ou d'un palier radial. Le palier de découplage peut être du type d'un palier à rouleaux ;
- avantageusement, la portée de pré-centrage de la bague de lubrification est insérée dans un espace libre du palier de découplage situé radialement entre le diamètre externe de la bague annulaire intérieure et le diamètre interne de la bague annulaire extérieure.
- selon une première variante de réalisation, la portée de pré-centrage de la bague de lubrification est en appui radial contre la bague annulaire intérieure dudit palier de découplage. Plus particulièrement, une face radialement intérieure de la portée de pré-centrage de la bague de lubrification de l'ensemble conforme au deuxième aspect de l'invention est en appui radial contre une face radialement extérieure de la bague annulaire intérieure du palier de découplage dudit ensemble. De manière avantageuse, il existe une excentration radiale entre une face radialement extérieure de la portée de pré-centrage de la bague de lubrification et une face radialement intérieure de la bague annulaire extérieure du palier de découplage afin de rendre possible un déplacement radial relatif entre ladite bague de lubrification et ledit palier de découplage. C'est cette excentration qui permet de faciliter d'une part le pré-assemblage de la bague de lubrification sur l'ensemble conforme au deuxième aspect de l'invention, et d'autre part l'assemblage dudit ensemble sur un module d'embrayage comme il sera décrit ultérieurement en référence au troisième aspect de l'invention ;
- selon une deuxième variante de réalisation, la portée de pré-centrage de la bague de lubrification est en appui radial contre la bague annulaire extérieure dudit palier de découplage. Plus particulièrement, une face radialement extérieure de la portée de pré-centrage de la bague de lubrification de l'ensemble conforme au deuxième aspect de l'invention est en appui radial contre une face radialement intérieure de la bague annulaire extérieure du palier de découplage dudit ensemble. De manière avantageuse, il existe une excentration radiale entre une face radialement intérieure de la portée de pré-centrage de la bague de lubrification et une face radialement extérieure de la bague annulaire intérieure du palier de découplage afin de rendre possible un déplacement radial relatif entre ladite bague de lubrification et ledit palier de découplage ;
- le palier de découplage est en appui axial contre la première face latérale d'élongation radiale de la bague de lubrification. Plus particulièrement, selon une première variante de réalisation, la première face latérale d'élongation radiale de la bague de lubrification de l'ensemble conforme au deuxième aspect de l'invention est en appui axial contre la bague annulaire intérieure du palier de découplage. Cette variante de réalisation est particulièrement avantageuse lorsque la portée de pré-centrage de la bague de lubrification est en appui radial contre la bague annulaire intérieure du palier de découplage. Selon une deuxième variante de lubrification alternative, la première face latérale d'élongation radiale de la bague de lubrification de l'ensemble conforme au deuxième aspect de l'invention est en appui axial contre la bague annulaire extérieure du palier de découplage. Cette variante de réalisation est particulièrement avantageuse lorsque la portée de pré-centrage de la bague de lubrification est en appui radial contre la bague annulaire extérieure du palier de découplage.

Selon un troisième aspect de l'invention, il est proposé un module d'embrayage d'axe de rotation O et comprenant :
- un ensemble conforme au deuxième aspect de l'invention ou selon l'un quelconque de ses perfectionnements, le palier de découplage dudit ensemble formant un palier support du module d'embrayage, ledit palier support étant configuré pour supporter les efforts radiaux de l'au moins un embrayage.
- un système d'actionnement de l'au moins un embrayage, ledit système d'actionnement permettant de configurer l'au moins un embrayage dans une configuration comprise entre :
   o une configuration dite embrayée dans laquelle l'au moins un moyeu de sortie de couple est couplé en rotation avec le moyeu d'entrée de couple de l'ensemble conforme au deuxième aspect de l'invention ; et
   o une configuration dite débrayée dans laquelle l'au moins un moyeu de sortie de couple est découplé en rotation du moyeu d'entrée de couple de l'ensemble conforme au deuxième aspect de l'invention.

Le module d'embrayage conforme au troisième aspect de l'invention comprend avantageusement au moins un des perfectionnements ci-dessous, les caractéristiques techniques formant ces perfectionnements pouvant être prises seules ou en combinaison :
- le système d'actionnement comprend un carter comportant une portée cylindrique sur laquelle est emmanché l'ensemble, le palier support et la bague de lubrification étant centrés et en appui radial sur ladite portée cylindrique du carter ;
- la portée cylindrique du carter comprend un chanfrein situé à une extrémité axiale avant, ledit chanfrein formant une surface conique. Cette configuration avantageuse permet de faciliter l'assemblage du module d'embrayage conforme au troisième aspect de l'invention, en facilitant plus particulièrement l'insertion du palier support et de la bague de lubrification dudit ensemble sur la portée cylindrique du carter du système d'actionnement. En effet, lors de l'emmanchement du palier support et de la bague de lubrification sur la portée cylindrique du carter, la bague de lubrification - excentrée lors de son pré-assemblage sur l'ensemble conforme au deuxième aspect de l'invention - vient en appui radial contre la surface conique formée par le chanfrein. Consécutivement, au fur et à mesure de l'avancement axial de la bague de lubrification sur la portée cylindrique durant l'opération d'emmanchement, la position radiale de la bague de lubrification est ajustée jusqu'à être centrée par rapport à l'axe de rotation du module d'embrayage lorsque l'ensemble parvient dans sa position d'assemblage sur le carter du système d'actionnement ;

- le module d'embrayage conforme au troisième aspect de l'invention comprend un anneau d'arrêt axial logé dans une gorge formée sur la portée cylindrique du carter et permettant de réaliser un arrêt axial de la bague de lubrification par rapport audit carter. En d'autres termes, l'une des faces latérales d'élongation radiale de la bague de lubrification - et préférentiellement la deuxième face latérale d'élongation radiale
   - est en appui axial contre l'anneau d'arrêt axial du module d'embrayage ;
- le module d'embrayage conforme au troisième aspect de l'invention est avantageusement du type d'un module d'embrayage humide, un fluide hydraulique circulant dans l'au moins un embrayage afin de le lubrifier et de le refroidir durant son fonctionnement ;
- selon un premier mode de réalisation, le module d'embrayage conforme au troisième aspect de l'invention est du type d'un module à simple embrayage, ledit module d'embrayage comprenant un unique embrayage piloté par un unique actionneur du système d'actionnement. Selon un deuxième mode de réalisation alternatif au premier mode de réalisation, le module d'embrayage conforme au troisième aspect de l'invention est du type d'un double embrayage, ledit module d'embrayage comprenant un premier embrayage piloté par un premier actionneur du système d'actionnement et un deuxième embrayage piloté par un deuxième actionneur dudit système d'actionnement ;
- dans le cas d'un module d'embrayage du type d'un double embrayage, le module d'embrayage conforme au troisième aspect de l'invention comprend - selon une première version compatible avec n'importe laquelle des variantes de réalisation décrites précédemment - deux embrayages configurés selon une configuration axiale, un premier embrayage étant situé en avant d'un deuxième embrayage, les deux embrayages étant situés à une même distance radiale par rapport à l'axe de rotation. Selon une deuxième version compatible avec n'importe laquelle des variantes de réalisation décrites précédemment, le module d'embrayage conforme au troisième aspect de l'invention comprend deux embrayages configurés selon une configuration radiale, un premier embrayage étant situé radialement à l'extérieur d'un deuxième embrayage.

Des modes de réalisation variés de l'invention sont prévus, intégrant selon l'ensemble de leurs combinaisons possibles les différentes caractéristiques optionnelles exposées ici.

### Description des figures

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
- la FIGURE 1 illustre une vue partielle en coupe axiale d'un ensemble conforme au deuxième aspect de l'invention et comprenant une bague de lubrification conforme au premier aspect de l'invention et un palier de découplage ;
- la FIGURE 2 illustre une vue partielle en coupe axiale d'un exemple de réalisation d'un ensemble conforme au deuxième aspect de l'invention et comportant la bague de lubrification et le palier de découplage illustrés sur la FIGURE 1, ledit ensemble illustré sur la FIGURE 2 étant représenté dans son état avant assemblage sur un module d'embrayage conforme au troisième aspect de l'invention ;
- la FIGURE 3 illustre une vue partielle en coupe axiale du module d'embrayage illustré sur la FIGURE 2 lorsque l'ensemble illustré sur la FIGURE 2 est assemblé sur ledit module d'embrayage.

Bien entendu, les caractéristiques, les variantes et les différentes formes de réalisation de l'invention peuvent être associées les unes avec les autres, selon diverses combinaisons, dans la mesure où elles ne sont pas incompatibles ou exclusives les unes des autres. On pourra notamment imaginer des variantes de l'invention ne comprenant qu'une sélection de caractéristiques décrites par la suite de manière isolées des autres caractéristiques décrites, si cette sélection de caractéristiques est suffisante pour conférer un avantage technique ou pour différencier l'invention par rapport à l'état de la technique antérieur.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

### Description détaillée de l'invention

Dans la suite de la description qui suit et dans les revendications, on utilisera à titre non limitatif et afin d'en faciliter la compréhension, les termes :
- « avant » ou « arrière » selon une direction définie par rapport à une orientation axiale déterminée par un axe de rotation O du module d'embrayage ou de l'ensemble, « l'arrière » désignant la partie située à droite des figures, du côté d'une boite de vitesses par exemple, et « l'avant » désignant la partie gauche des figures, du côté d'un moteur à combustion interne par exemple ; et
- « intérieur / interne » ou « extérieur / externe » par rapport à l'axe de rotation O et suivant une orientation radiale, orthogonale à l'orientation axiale, « l'intérieur » désignant une partie proximale de l'axe de rotation O et « l'extérieur » désignant une partie distale dudit axe de rotation O.

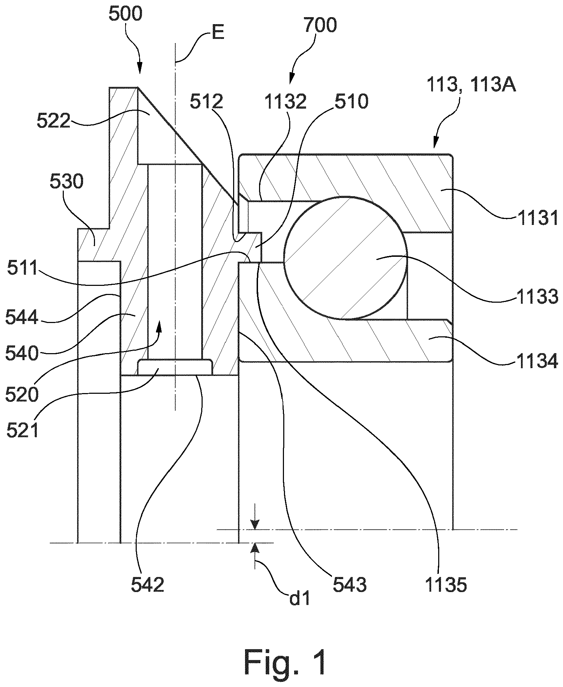

La FIGURE 1 illustre un exemple de réalisation d'un ensemble 700 conforme au deuxième aspect de l'invention comprenant une bague de lubrification 500 conforme au premier aspect de l'invention et un palier de découplage 113A.

Le palier de découplage 113A est un palier à roulements. Le palier de découplage 113A comprend une bague annulaire extérieure 1131 et une bague annulaire intérieure 1134. Les bagues annulaires 1131, 1134 du palier de découplage 113A forment ensemble une cage à l'intérieur de laquelle sont disposés une pluralité d'éléments roulants 1133. Avantageusement, le palier de découplage 113A est du type d'un palier à contacts obliques afin de pouvoir transmettre à la fois un effort axial et un effort radial.

La bague de lubrification 500 est configurée pour permettre une communication fluidique entre une partie située radialement à l'intérieur de ladite bague de lubrification 500 et une partie située radialement à l'extérieur de ladite bague de lubrification 500. La bague de lubrification 500 a une forme cylindrique 540 dont une génératrice est formée par l'axe de rotation O, et elle s'étend radialement vers l'extérieur de manière sensiblement perpendiculairement à l'axe de rotation O. La bague de lubrification 500 est délimitée radialement vers l'intérieur par un contour intérieur 542 et, radialement vers l'extérieur, par une surface périphérique extérieure 544-.

La bague de lubrification 500 est située axialement contre le palier de découplage 113A, au travers d'un appui axial contre sa bague annulaire extérieure 1131, et/ou au travers d'un appui axial contre sa bague annulaire intérieure 1134.

La bague de lubrification 500 comprend en outre une portée de pré-centrage 510 qui s'étend axialement en saillie par rapport à une première face latérale 543 d'élongation radiale de la forme cylindrique 540 afin de permettre d'assembler précisément ladite bague de lubrification 500 sur le palier de découplage 113A. Dans l'exemple illustré sur la FIGURE 1, la portée de pré-centrage 510 est cylindrique suivant l'axe de rotation O : une face intérieure 511 et une face extérieure 512 de ladite portée de pré-centrage 510 sont orientées parallèlement à l'axe de rotation O.

La bague de lubrification 500 comprend une portée de centrage 530 qui s'étend axialement en saillie par rapport à une deuxième face latérale 544 d'élongation radiale de la forme cylindrique 540. Dans l'exemple illustré sur la FIGURE 1, la portée de centrage 530 est cylindrique suivant l'axe de rotation O. Préférentiellement encore, la portée de centrage 530 est symétrique par rapport à la portée de pré-centrage 510 et au regard d'un axe E perpendiculaire à l'axe de rotation O.

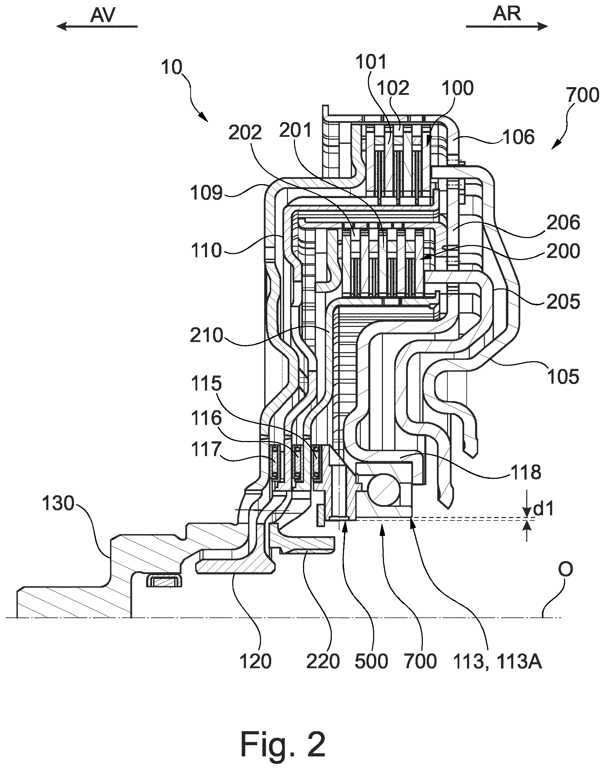

L'ensemble 700 conforme au deuxième aspect de l'invention permet de préassembler la bague de lubrification 500 sur le palier de découplage 113A avant un montage ultérieur sur un module d'embrayage tel que décrit en référence à la FIGURE 2. Cet assemblage est facilité par la présence de la portée de pré-centrage 510 qui collabore avec le palier de découplage 113A. En particulier, la FIGURE 1 illustre le montage de la bague de lubrification 500 sur le palier de découplage 113A, lorsque ladite bague de lubrification 500 et ledit palier de découplage 113A ne sont pas encore assemblé sur le module d'embrayage.

Au cours de cette étape de pré assemblage, la bague de lubrification 500 repose radialement sur le palier de découplage 113A par l'intermédiaire de la portée de pré-centrage 510. En d'autres termes, la face intérieure 511 de la portée de pré-centrage 510 est en appui radial contre une face extérieure 1135 de la bague annulaire intérieure 1134 du palier de découplage 113A. Cette configuration avantageuse permet de réaliser un montage temporaire de la bague de lubrification 500 sur le palier de découplage 113A, ledit montage temporaire étant excentré par rapport à l'axe de rotation O. Dans cette configuration, il existe une excentration radiale non nulle d1 entre le contour intérieur 542 de la bague de lubrification 500 et le palier de découplage 113A. En d'autres termes, le contour intérieur 542 de la bague de lubrification 500 est situé à une distance radiale non nulle - égale à l'excentration radiale d1 - de la face intérieure de la bague annulaire intérieure 1134 du palier de découplage 113A. En d'autres termes encore, et comme visible plus particulièrement sur la FIGURE 2, lorsque l'ensemble conforme au deuxième aspect de l'invention n'est pas encore assemblé sur la module d'embrayage conforme au troisième aspect de l'invention, la bague de lubrification 500 est excentrée par rapport au palier de découplage 113A.De manière avantageuse, l'excentration radiale d1 de la bague de lubrification 500 par rapport au palier de découplage 113A est limitée, sous l'effet de la gravité et du poids de ladite bague de lubrification 500.

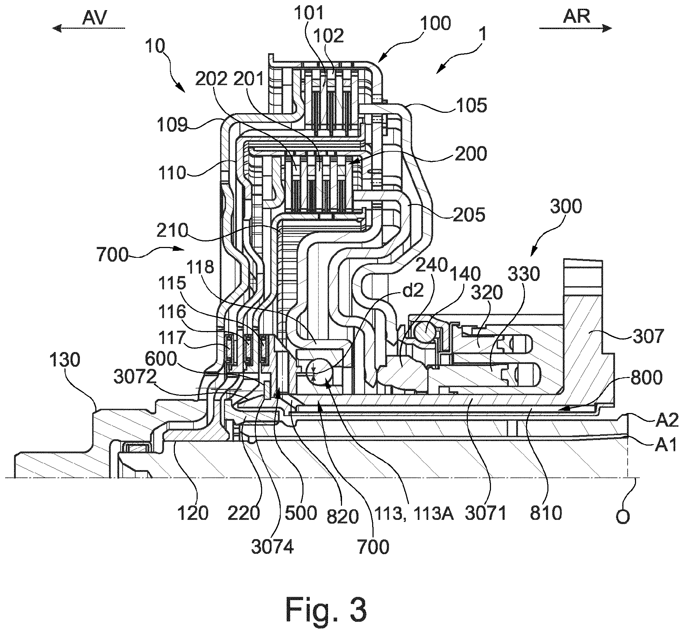

A contrario, et comme visible plus particulièrement sur la FIGURE 3, lorsque l'ensemble 700 est monté sur le module d'embrayage 1, alors la bague de lubrification 500 est décalée radialement vers l'extérieur, de sorte que la portée de pré-centrage 510 n'est plus en appui radial contre la bague annulaire intérieure 1134 du palier de découplage 113A, et il existe un jeu radial non nul d2 visible sur la FIGURE 3 entre une face extérieure 1135 de la bague annulaire intérieure 1134 du palier de découplage 113A et la face intérieure 511 de la portée de pré-centrage 510. Ainsi, dans cette configuration dans laquelle l'ensemble conforme au deuxième aspect de l'invention est assemblé sur le module d'embrayage conforme au troisième aspect de l'invention, la bague de lubrification 500 est centrée avec le palier de découplage 113A par rapport à l'axe de rotation O. En d'autres termes, la bague de lubrification 500 et le palier de découplage 113A sont alors montés coaxialement par rapport à l'axe de rotation O.

La bague de lubrification 500 comprend au moins un canal de lubrification 520 traversant ladite bague de lubrification 500 entre le contour intérieur 542 et la surface périphérique extérieure de la forme cylindrique 540. L'au moins un canal de lubrification 520 traversant la bague de lubrification 500 permet ainsi une mise en communication fluidique entre une partie située radialement à l'intérieur de ladite bague de lubrification 500 - destinée à collaborer avec un canal d'acheminement du fluide hydraulique situé au niveau du module d'embrayage 1 tel qu'il sera décrit en référence à la FIGURE 3 - et une partie située radialement à l'extérieur de ladite bague de lubrification - destinée à collaborer avec une cavité logeant au moins un embrayage du module d'embrayage tel qu'il sera décrit en référence à la FIGURE 3.

Dans l'exemple illustré sur la FIGURE 1, l'au moins un canal de lubrification 520 de la bague de lubrification 500 s'étend de manière linéaire entre le contour intérieur 542 et la surface périphérique extérieure, et perpendiculairement à l'axe de rotation O. Éventuellement, l'au moins un canal de lubrification 520 peut former un angle compris entre -20° et 20° par rapport à l'axe E, afin d'optimiser la circulation fluidique du fluide hydraulique en direction de l'embrayage 100, 200 correspondant du module d'embrayage 1 avec lequel la bague de lubrification 500 est destinée à collaborer.

De manière avantageuse, la bague de lubrification 500 comprend une pluralité de canaux de lubrification 520 régulièrement angulairement répartis autour de l'axe de rotation O.

Dans l'exemple illustré sur la FIGURE 1, au niveau de son extrémité radiale intérieure et/ou de son extrémité radiale extérieure 522, l'au moins un canal de lubrification 520 est avantageusement formé par une gorge intérieure 521 et/ou une gorge extérieure 522, chaque gorge 521, 522 s'étendant circonférentiellement autour de l'axe de rotation O, respectivement au niveau du contour intérieur 542 et/ou de la surface périphérique extérieure de la bague de lubrification 500. Cette configuration avantageuse permet d'améliorer la communication fluidique entre la bague de lubrification 500 et le module d'embrayage 1 avec lequel ladite bague de lubrification 500 et/ou ledit ensemble 700 sont destinés à collaborer.

La FIGURE 2 décrit l'ensemble 700 conforme au deuxième aspect de l'invention avant son assemblage sur le module d'embrayage 1, et la FIGURE 3 illustre le module d'embrayage 1 lorsque l'ensemble 700 est assemblé.

L'ensemble conforme au deuxième aspect de l'invention comprend avantageusement un mécanisme à double embrayages 10, préférentiellement du type à double embrayages humides. Le mécanisme à double embrayages 10 comprend un premier embrayage 100 et un deuxième embrayage 200. Dans l'exemple de réalisation illustré sur la FIGURE 2, le mécanisme à double embrayage 10 est selon une configuration radiale, le premier embrayage 100 étant situé à l'extérieur du deuxième embrayage 200. Alternativement, le mécanisme à double embrayages 10 peut être dans une configuration axiale, le premier embrayage 100 étant situé devant le deuxième embrayage 200.

D'une manière générale, le mécanisme à double embrayages 10 est agencé pour pouvoir coupler en rotation un arbre d'entrée, non représenté, à un premier arbre de transmission A1 ou alternativement à un deuxième arbre de transmission A2 par l'intermédiaire respectivement du premier embrayage 100 ou du deuxième embrayage 200.

Dans le contexte de l'invention, l'arbre d'entrée est entraîné en rotation par au moins un vilebrequin d'un moteur, par exemple un moteur thermique ; et les premier et deuxième arbres de transmission A1, A2 sont destinés à être couplés en rotation à la transmission, telle que par exemple une boite de vitesses du type de celles équipant des véhicules automobiles.

Le premier embrayage 100 et le deuxième embrayage 200 sont avantageusement du type multidisques. Chaque embrayage multidisques comprend d'une part une pluralité de premiers éléments de friction 101, 201, tels que par exemple des flasques, liés solidairement en rotation à l'arbre d'entrée, et d'autre part une pluralité de deuxièmes éléments de friction 102, 202, tels que par exemples des disques de friction, liés solidairement en rotation à au moins l'un des arbres de transmission A1, A2. Éventuellement, la pluralité de premiers éléments de friction 101, 201 consiste en des disques de friction liés solidairement en rotation à l'arbre d'entrée, et la pluralité de deuxièmes éléments de friction 102, 202 consiste en des flasques liées solidairement en rotation à au moins l'un des arbres de transmission A1, A2.

Le premier arbre de transmission A1 est couplé en rotation à l'arbre d'entrée par l'intermédiaire du premier embrayage 100. Le premier arbre de transmission A1 est entraîné par l'arbre d'entrée en rotation lorsque le premier embrayage 100 est configuré dans une position dite embrayée pour laquelle la pluralité de premiers éléments de friction 101 est couplée en rotation à la pluralité de deuxièmes éléments de friction 102. Alternativement, le premier arbre de transmission A1 est découplé en rotation de l'arbre d'entrée lorsque le premier embrayage 100 est configuré dans une position dite débrayée pour laquelle la pluralité de premiers éléments de friction 101 est découplée en rotation à la pluralité de deuxièmes éléments de friction 102.

De manière analogue, le deuxième arbre de transmission A2 est couplé en rotation à l'arbre d'entrée par l'intermédiaire du deuxième embrayage 200. Le deuxième arbre de transmission A2 est entraîné par l'arbre d'entrée en rotation lorsque le deuxième embrayage 200 est configuré dans une position embrayée pour laquelle la pluralité de premiers éléments de friction 201 est couplée en rotation à la pluralité de deuxièmes éléments de friction 202. Alternativement, le deuxième arbre de transmission A2 est découplé en rotation de l'arbre d'entrée lorsque le deuxième embrayage 200 est configuré dans une position dite débrayée pour laquelle la pluralité de premiers éléments de friction 201 est découplée en rotation à la pluralité de deuxièmes éléments de friction 202.

Le premier embrayage 100 et le deuxième embrayage 200 sont agencés pour transmettre alternativement une puissance dite d'entrée depuis l'arbre d'entrée, à l'un des deux arbres de transmission A1, A2, en fonction de la configuration respective de chaque embrayage 100 et 200 et par l'intermédiaire d'un voile d'entrée 109.

Le mécanisme à double embrayages 10 comprend un moyeu d'entrée de couple 130 qui est couplé en rotation d'une part à l'arbre d'entrée et d'autre part au voile d'entrée 109 afin de transmettre la puissance - le couple et la vitesse de rotation - générée au niveau du moteur à l'un des embrayages 100, 200 du mécanisme à double embrayages 10. À cet effet, le voile d'entrée 109 est lié en rotation à un premier porte-disques d'entrée 106 et à un deuxième porte-disques d'entrée 206, ledit premier porte-disques d'entrée 106 étant couplé en rotation avec les premiers éléments de friction 101 du premier embrayage 100, ledit deuxième porte-disques d'entrée 206 étant couplé en rotation avec les premiers éléments de friction 201 du deuxième embrayage 200.

Le premier embrayage 100 est couplé en rotation au premier arbre de transmission A1 par l'intermédiaire d'un premier porte-disques de sortie 110. Plus particulièrement, le premier porte-disques de sortie 110 est couplé en rotation aux deuxièmes éléments de friction 102 du premier embrayage 100 ; et le premier porte-disques de sortie 110 est couplé en rotation à un premier moyeu de sortie de couple 120 au niveau de son extrémité radiale intérieure. Le premier moyeu de sortie de couple 120 comporte radialement à l'intérieur des cannelures axiales agencées pour coopérer avec des cannelures complémentaires situées sur le premier arbre de transmission A1, de manière à réaliser un couplage en rotation.

Le deuxième embrayage 200 est couplé en rotation au deuxième arbre de transmission A2 par l'intermédiaire d'un deuxième porte-disques de sortie 210. Plus particulièrement, le deuxième porte-disques de sortie 210 est couplé en rotation aux deuxièmes éléments de friction 202 du deuxième embrayage 200 ; et le deuxième porte-disques de sortie 210 est couplé en rotation à un deuxième moyeu de sortie de couple 220 au niveau de son extrémité radiale intérieure. Le deuxième moyeu de sortie de couple 220 comporte radialement à l'intérieur des cannelures axiales agencées pour coopérer avec des cannelures complémentaires situées sur le deuxième arbre de transmission A2, de manière à réaliser un couplage en rotation.

Un premier palier axial 117 est interposé entre le premier moyeu de sortie de couple 120 et le moyeu d'entrée de couple 130 afin de pouvoir transmettre des efforts axiaux durant le fonctionnement du module d'embrayage 1 malgré les vitesses de rotation différentes auxquelles peuvent respectivement tourner l'arbre d'entrée et le premier arbre de transmission A1.

De manière comparable, un palier deuxième axial 116 est intercalé entre le premier porte-disques de sortie 110 et le deuxième porte-disques de sortie 210 afin de pouvoir transmettre un effort axial entre les deux porte-disques de sortie 110, 210 qui peuvent tourner à des vitesses différentes lorsque les premier et deuxième embrayages 100, 200 sont configurés dans une configuration différente.

À son extrémité intérieure, le porte-disques d'entrée 106 comprend un talon 118 en appui radial sur un palier support 113 agencé pour supporter la charge radiale du mécanisme d'embrayage 10. La palier support 113 forme ici le palier de découplage 113A tel que décrit précédemment en référence à la FIGURE 1 : l'ensemble 700 mis en oeuvre sur le module d'embrayage 1 est formé du palier support 113 et de la bague de lubrification 500.

La FIGURE 2 illustre ainsi un exemple de réalisation de l'ensemble 700 conforme au deuxième aspect de l'invention et comportant le mécanisme d'embrayage 10 tel que décrit précédemment, et la bague de lubrification 500 associée au palier de découplage 113A tels que décrits en référence à la FIGURE 1.

La FIGURE 2 illustre l'ensemble 700 préassemblé avant son montage sur un module d'embrayage 1. En revanche, la FIGURE 3 illustre l'assemblage de l'ensemble 700 sur un système d'actionnement 300 du mécanisme d'embrayage 10, formant ainsi le module d'embrayage 1 conforme au troisième aspect de l'invention.

En effet, les premier et deuxième embrayages 100 et 200 du mécanisme d'embrayage 10 de l'ensemble 700 sont commandés par le système d'actionnement 300 qui est agencé pour pouvoir les configurer dans une configuration quelconque comprise entre la configuration embrayée et la configuration débrayée. À cet effet, le système d'actionnement 300 comprend :
- un premier actionneur 320 agencé pour configurer le premier embrayage 100 dans une configuration comprise entre la configuration embrayée et la configuration débrayée ;
- un deuxième actionneur 330 agencé pour configurer le deuxième embrayage 200 dans une configuration comprise entre la configuration embrayée et la configuration débrayée ;
- un carter 307 dans lequel sont logés au moins une partie des premier et deuxième actionneurs 320, 330.

Le premier actionneur 320 est lié au premier embrayage 100 par l'intermédiaire d'une part d'un premier palier de découplage 140 et d'autre part d'un premier organe de transmission de force 105. Le premier palier de découplage 140 est agencé pour transmettre des efforts axiaux générés par le premier actionneur 320 au premier organe de transmission de force 105.

Le premier organe de transmission de force 105 est agencé pour transmettre un effort axial, exercé parallèlement à l'axe longitudinal O, au premier embrayage 100 afin de pouvoir écarter ou presser les premiers éléments de friction 101 contre les deuxièmes éléments de friction 102. Lorsque les premiers éléments de friction 101 sont écartés des deuxièmes éléments de friction 102, alors le premier embrayage 100 est configuré dans sa configuration débrayée. En revanche, lorsque les premiers éléments de friction 101 sont pressés contre les deuxièmes éléments de friction 102, alors le premier embrayage 100 est configuré dans sa configuration embrayée.

Le deuxième actionneur 330 est lié au deuxième embrayage 200 par l'intermédiaire d'une part d'un deuxième palier de découplage 240 et d'autre part d'un deuxième organe de transmission de force 205. Le deuxième palier de découplage 240 est agencé pour transmettre des efforts axiaux générés par le deuxième actionneur 330 au deuxième organe de transmission de force 205. Le deuxième organe de transmission de force 205 est globalement situé axialement entre le porte-disques d'entrée 106 et le premier organe de transmission de force 105.

Le deuxième organe de transmission de force 205 est agencé pour transmettre un effort axial au deuxième embrayage 200 afin de pouvoir écarter ou presser les premiers éléments de friction 201 contre les deuxièmes éléments de friction 202. Lorsque les premiers éléments de friction 201 sont écartés des deuxièmes éléments de friction 202, alors le deuxième embrayage 200 est configuré dans sa configuration débrayée. En revanche, lorsque les premiers éléments de friction 201 sont pressés contre les deuxièmes éléments de friction 202, alors le deuxième embrayage 200 est configuré dans sa configuration embrayée.

Lorsque le module d'embrayage 1 est assemblé, comme visible sur la FIGURE 3, l'ensemble 700 est emmanché à une extrémité axiale de la portée cylindrique 3071 du carter 307 du système d'actionnement 300. En d'autres termes, le palier support 113 est en appui radial contre la portée cylindrique 3071 du carter 307 par l'intermédiaire de sa bague annulaire intérieure 1134. En outre, la bague de lubrification 500 est située dans une position axialement intermédiaire entre le palier support 113 et les porte-disques de sortie 110, 210. Plus particulièrement, la bague de lubrification 500 est située axialement contre le palier support 113, au travers d'un appui axial contre sa bague annulaire extérieure 1131, et/ou au travers d'un appui axial contre sa bague annulaire intérieure 1134. En outre, la bague de lubrification 500 est en appui axial contre un troisième palier axial 115 configuré pour permettre de transmettre un effort axial entre le deuxième porte-disques de sortie 210 et la bague de lubrification 500 malgré des vitesses de rotation différentes.

Afin de garantir son bon fonctionnement, le module d'embrayage 1 est bloqué axialement pour permettre de transmettre un effort axial depuis le système d'actionnement 300 aux embrayages 100, 200. À cet effet, la portée cylindrique 3071 du carter 307 comprend une gorge circonférentielle 3074 visible sur la FIGURE 3. La gorge circonférentielle 3074 loge un anneau d'arrêt 600 qui permet de réaliser un arrêt axial de la bague de lubrification 500 par rapport au carter 307 du système d'actionnement 300.

Afin de lubrifier et de refroidir les premier 100 et deuxième 200 embrayages durant leur fonctionnement, le mécanisme à double embrayages 10 comprend en outre un circuit hydraulique permettant d'acheminer un fluide hydraulique jusqu'aux premier 100 et deuxième 200 embrayage. Plus particulièrement, le carter 307 du système d'actionnement 300 comprend un canal 800 permettant à un fluide hydraulique de circuler, ledit canal 800 comprenant une partie d'extension axiale 810 et une partie d'extension radiale 820 située à l'extrémité axiale avant de la partie d'extension axiale 810. La partie d'extension axiale 810 du canal 800 s'étend axialement dans une portée d'élongation axiale 3071 du carter 307 qui est située radialement à l'intérieur des premier 320 et deuxième 330 actionneurs et qui s'étend axialement au-delà desdits premier 320 et deuxième 330 actionneurs, en direction du voile d'entrée 109. La partie d'extension radiale 820 du canal 800 est en communication fluidique avec l'au moins un canal 520 de lubrification de la bague de lubrification 500.

L'invention permet de faciliter l'assemblage du module d'embrayage 1 en permettant de plus facilement bloquer axialement l'ensemble 700 sur le carter 307 du système d'actionnement 300. La FIGURE 2 illustre une étape intermédiaire de l'assemblage du module d'embrayage 1. Au cours de cette étape intermédiaire, l'ensemble 700 a été formé en associant le mécanisme d'embrayage 10 à la bague de lubrification 500 et au palier support 113, comme décrit en référence aux FIGURES 1 et 2. Ainsi, dans cet état temporaire de pré-assemblage visible sur la FIGURE 2, la bague de lubrification 500, par l'intermédiaire de sa portée de pré-centrage 510, est en appui radialement sur la bague annulaire intérieure 1134 du palier support 113, de sorte que qu'il existe une excentration radiale d1 non nul entre la face intérieure de la bague annulaire intérieure 1134 du palier support 113 et le contour intérieur 542 de la bague de lubrification 500. En d'autres termes, lorsque l'ensemble 700 n'est pas emmanché sur la portée cylindrique 3071 du carter 307 du système d'actionnement 300, la bague de lubrification 500 est radialement excentrée par rapport au palier support 113. Cette configuration avantageuse permet de réaliser un pré-centrage temporaire de la bague de lubrification 500 sur le palier support 113 et par rapport à l'axe de rotation O.

La FIGURE 3 illustre le module d'embrayage 1 lorsqu'il est assemblé, et notamment en présence du système d'actionnement 300. Lorsque l'ensemble 700 est emmanchée sur la portée cylindrique 3071 du carter 307, la bague de lubrification 500 est décalée radialement vers l'extérieur par rapport à sa position illustrée à la FIGURE 2, de sorte que le contour intérieur 542 de la bague de lubrification 500 est coaxial avec la face extérieure de la portée cylindrique 3071 du carter 307 et/ou avec la face intérieure de la bague annulaire intérieure 1134 du palier support 113. Afin de faciliter l'insertion du palier support 113 sur la portée cylindrique 3071 du carter 307, une extrémité axiale avant AV de ladite portée cylindrique 3071 peut comporter un chanfrein 3072. Le chanfrein 3072 de la portée cylindrique 3071 a préférentiellement une forme conique afin de faciliter l'insertion du palier support 113 notamment. Dans cette configuration, la portée de pré-centrage 510 n'est plus en appui radial contre la bague annulaire intérieure 1134 du palier support 113, et il existe un jeu radial non nul d2 entre une face extérieure de la bague annulaire intérieure 1134 du palier support 113 et la face intérieure 511 de la portée de pré-centrage 510.

En synthèse, l'invention concerne notamment une bague de lubrification 500 qui contribue au blocage axial du module d'embrayage 1, ladite bague de lubrification 500 étant située contre le palier support 113 et formant avec lui un ensemble 700. La bague de lubrification 500 comprend une portée de pré-centrage 510 qui permet de réaliser une configuration d'assemblage temporaire avec le palier support 113, lorsque l'ensemble 700 est préassemblé avant son intégration dans le module d'embrayage 1. Dans cette configuration d'assemblage temporaire, la bague de lubrification 500 est en appui radial contre l'une des bagues annulaires 1131, 1134 du palier support, de manière excentrée par rapport audit palier support 113. Lorsque l'ensemble 700 est monté sur le module d'embrayage, la bague de lubrification 500 est recentrée par rapport au palier support 113, de sorte que le contour intérieur 542 de ladite bague de lubrification 500 est coaxial avec la face intérieure de la bague annulaire intérieure 1134 du palier support 113.

Bien sûr, l'invention n'est pas limitée aux exemples qui viennent d'être décrits et de nombreux aménagements peuvent être apportés à ces exemples sans sortir du cadre de l'invention telle que définie par les revendications.

Notamment, les différentes caractéristiques, formes, variantes et modes de réalisation de l'invention peuvent être associées les unes avec les autres selon diverses combinaisons dans la mesure où elles ne sont pas incompatibles ou exclusives les unes des autres. En particulier toutes les variantes et modes de réalisation décrits précédemment sont combinables entre eux.

## Revendications

1. Ensemble (700) pour module d'embrayage, ledit ensemble (700) comprenant :
- un palier de découplage (113A) comprenant au moins une pluralité d'éléments roulants (1133) en prise entre deux bagues annulaires (1131, 1134) selon l'axe de rotation (O) ;
- une bague de lubrification (500) délimitée radialement vers l'intérieur par un contour intérieur (542) et, radialement vers l'extérieur, par une surface périphérique extérieure, ladite bague de lubrification (500) comprenant au moins un canal de lubrification (520) traversant ladite bague de lubrification (500) entre ledit contour intérieur (542) et ladite surface périphérique extérieure et comprenant en outre une portée de pré-centrage (510) qui s'étend en saillie par rapport à une première face latérale (543) d'élongation radiale de la bague de lubrification (500), ladite portée de pré-centrage (510) étant située radialement entre le contour intérieur (542) et la surface périphérique extérieure, dans lequel la portée de pré-centrage (510) est en appui radial contre l'une des bagues annulaires (1131, 1134) du palier de découplage (113A) ;
- au moins un embrayage (100, 200) configuré pour pouvoir coupler en rotation sélectivement un moyeu d'entrée de couple (130) à au moins un moyeu de sortie de couple (120, 220), chaque au moins un embrayage (100, 200) comprenant :
o des premiers éléments de friction (101, 201) couplés en rotation au moyeu d'entrée de couple (130) ;
o des deuxièmes éléments de friction (102, 202) couplés en rotation au moyeu de sortie de couple (120, 220),
**caractérisé en ce que** le palier de découplage (113A) comprend une bague annulaire intérieure (1134) située radialement à l'intérieur des éléments roulants (1133) par rapport à l'axe de rotation (O) et une bague annulaire extérieure (1131) située radialement à l'extérieur desdits éléments roulants (1133), ladite portée de pré-centrage (510) de la bague de lubrification (500) étant insérée dans un espace libre du palier de découplage (113A) situé radialement entre le diamètre externe de la bague annulaire intérieure (1134) et le diamètre interne de la bague annulaire extérieure (1131).

2. Ensemble (700) selon la revendication 1, dans laquelle la portée de pré-centrage (510) est cylindrique suivant l'axe de rotation (O), une face intérieure (511) et/ou une face extérieure (512) de ladite portée de pré-centrage (510) étant orientées parallèlement audit axe de rotation (O).

3. Ensemble (700) selon l'une quelconque des revendications précédentes, dans laquelle la bague de lubrification (500) comprend une portée de centrage (530) qui s'étend axialement en saillie par rapport à une deuxième face latérale (544) d'élongation radiale de la bague de lubrification (500), ladite portée de centrage (530) étant située radialement entre le contour intérieur (542) et la surface périphérique extérieure de ladite bague de lubrification (500).

4. Ensemble (700) selon l'une quelconque des revendications 2 ou 3, dans laquelle la portée de centrage (530) est symétrique de la portée de pré-centrage (510) par rapport à un axe (E) de symétrie perpendiculaire à l'axe de rotation (O).

5. Ensemble (700) selon l'une quelconque des revendications précédentes, dans laquelle l'au moins un canal de lubrification (520) de la bague de lubrification (500) comprend une pluralité de canaux de lubrification (520), lesdits canaux de lubrification (520) étant angulairement régulièrement répartis autour de l'axe de rotation (O), un angle entre deux canaux de lubrification (520) directement adjacent étant identique pour tous lesdits canaux de lubrification.

6. Ensemble (700) selon l'une quelconque des revendications précédentes, dans lequel le palier de découplage (113A) comprend une bague annulaire intérieure (1134) située radialement à l'intérieur des éléments roulants (1133) par rapport à l'axe de rotation (O) et une bague annulaire extérieure (1131) située radialement à l'extérieur desdits éléments roulants (1133), ladite bague annulaire intérieure (1134) et ladite bague annulaire extérieure (1131) étant configurées pour contraindre radialement les éléments roulants (1133) entre elles, la portée de pré-centrage (510) de la bague de lubrification (500) étant est en appui radial contre la bague annulaire intérieure (1134) dudit palier de découplage (113A).

7. Ensemble (700) selon l'une quelconque des revendications 1 à 5, dans lequel le palier de découplage (113A) comprend une bague annulaire intérieure (1134) située radialement à l'intérieur des éléments roulants (1133) par rapport à l'axe de rotation (O) et une bague annulaire extérieure (1131) située radialement à l'extérieur desdits éléments roulants (1133), ladite bague annulaire intérieure (1134) et ladite bague annulaire extérieure (1131) étant configurées pour contraindre radialement les éléments roulants (1133) entre elles, la portée de pré-centrage (510) de la bague de lubrification (500) étant est en appui radial contre la bague annulaire extérieure (1131) dudit palier de découplage (113A).

8. Ensemble (700) selon l'une quelconque des revendications 1 à 7, dans lequel le palier de découplage (113A) est en appui axial contre la première face latérale (543) d'élongation radiale de la bague de lubrification (500).

9. Module d'embrayage (1) d'axe de rotation (O) et comprenant :
- un ensemble (700) selon l'une quelconque des revendications 1 à 8, le palier de découplage (113A) dudit ensemble (700) formant un palier support (113) du module d'embrayage (1), ledit palier support (113) étant configuré pour supporter les efforts radiaux de l'au moins un embrayage (100, 200) ;
- un système d'actionnement 300 de l'au moins un embrayage (100, 200), ledit système d'actionnement (300) permettant de configurer l'au moins un embrayage (100, 200) dans une configuration comprise entre :
o une configuration dite embrayée dans laquelle l'au moins un moyeu de sortie de couple (120, 220) est couplé en rotation avec le moyeu d'entrée de couple (130) de l'ensemble (700) ; et
o une configuration dite débrayée dans laquelle l'au moins un moyeu de sortie de couple (120, 220) est découplé en rotation du moyeu d'entrée de couple (130) de l'ensemble (700).

10. Module d'embrayage (1) selon la revendication précédente, dans lequel le système d'actionnement (300) comprend un carter (307) comportant une portée cylindrique (3071) sur laquelle est emmanché l'ensemble (700), le palier support (113) et la bague de lubrification (500) étant centrés et en appui radial sur ladite portée cylindrique (3071) du carter (307).

11. Module d'embrayage selon la revendication précédente, dans lequel la portée cylindrique (3071) du carter (307) comprend un chanfrein (3072) situé à une extrémité axiale avant (AV), ledit chanfrein (3072) formant une surface conique.

## Patentansprüche

1. Anordnung (700) für ein Kupplungsmodul, wobei die Anordnung (700) Folgendes beinhaltet:
- ein Entkopplungslager (113A), das mindestens eine Vielzahl von Wälzelementen (1133) im Eingriff zwischen zwei kreisförmigen Ringen (1131, 1134) gemäß der Drehachse (0) beinhaltet;
- einen Schmierungsring (500), der radial nach innen durch eine Innenkontur (542) und radial nach außen durch eine äußere Umfangsoberfläche begrenzt wird, wobei der Schmierungsring (500) mindestens einen Schmierkanal (520) beinhaltet, der zwischen der Innenkontur (542) und der äußeren Umfangsoberfläche durch den Schmierungsring (500) hindurchgeht, und ferner einen Vorzentrierungsbereich (510) beinhaltet, der sich in Bezug auf eine erste Seitenfläche (543) radialer Ausdehnung des Schmierungsrings (500) vorspringend erstreckt, wobei sich der Vorzentrierungsbereich (510) radial zwischen der Innenkontur (542) und der äußeren Umfangsoberfläche befindet, wobei der Vorzentrierungsbereich (510) an einem der kreisförmigen Ringe (1131, 1134) des Entkopplungslagers (113A) radial anliegt;
- mindestens eine Kupplung (100, 200), die dazu konfiguriert ist, eine Drehmomenteingangsnabe (130) mit mindestens einer Drehmomentausgangsnabe (120, 220) selektiv drehfest koppeln zu können, wobei jede mindestens eine Kupplung (100, 200) Folgendes beinhaltet:
o erste Reibelemente (101, 201), die mit der Drehmomenteingangsnabe (130) drehgekoppelt sind;
o zweite Reibelemente (102, 202), die mit der Drehmomentausgangsnabe (120, 220) drehgekoppelt sind;
**dadurch gekennzeichnet, dass** das Entkopplungslager (113A) einen inneren kreisförmigen Ring (1134), der sich in Bezug auf die Drehachse (0) zu den Wälzelementen (1133) radial innenliegend befindet, und einen äußeren kreisförmigen Ring (1131), der sich zu den Wälzelementen (1133) radial außenliegend befindet, beinhaltet, wobei der Vorzentrierungsbereich (510) des Schmierungsrings (500) in einen freien Raum des Entkopplungslagers (113A) eingeführt ist, der sich radial zwischen dem Außendurchmesser des inneren kreisförmigen Rings (1134) und dem Innendurchmesser des äußeren kreisförmigen Rings (1131) befindet.

2. Anordnung (700) nach Anspruch 1, wobei der Vorzentrierungsbereich (510) gemäß der Drehachse (0) zylindrisch ist, wobei eine Innenfläche (511) und/oder eine Außenfläche (512) des Vorzentrierungsbereichs (510) parallel zu der Drehachse (0) ausgerichtet sind.

3. Anordnung (700) nach einem beliebigen der vorhergehenden Ansprüche, wobei der Schmierungsring (500) einen Zentrierungsbereich (530) beinhaltet, der sich in Bezug auf eine zweite Seitenfläche (544) radialer Ausdehnung des Schmierungsrings (500) axial vorspringend erstreckt, wobei sich der Zentrierungsbereich (530) radial zwischen der Innenkontur (542) und der äußeren Umfangsoberfläche des Schmierungsrings (500) befindet.

4. Anordnung (700) nach einem beliebigen der vorhergehenden Ansprüche 2 oder 3, wobei der Zentrierungsbereich (530) in Bezug auf eine Symmetrieachse (E), die zu der Drehachse (0) senkrecht ist, zu dem Vorzentrierungsbereich (510) symmetrisch ist.

5. Anordnung (700) nach einem beliebigen der vorhergehenden Ansprüche, wobei der mindestens eine Schmierkanal (520) des Schmierungsrings (500) eine Vielzahl von Schmierkanälen (520) beinhaltet, wobei die Schmierkanäle (520) winkelförmig gleichmäßig um die Drehachse (0) verteilt sind, wobei ein Winkel zwischen zwei direkt nebeneinander liegenden Schmierkanälen (520) für alle Schmierkanäle identisch ist.

6. Anordnung (700) nach einem beliebigen der vorhergehenden Ansprüche, wobei das Entkopplungslager (113A) einen inneren kreisförmigen Ring (1134), der sich in Bezug auf die Drehachse (0) zu den Wälzelementen (1133) radial innenliegend befindet, und einen äußeren kreisförmigen Ring (1131), der sich zu den Wälzelementen (1133) radial außenliegend befindet, beinhaltet, wobei der innere kreisförmige Ring (1134) und der äußere kreisförmige Ring (1131) dazu konfiguriert sind, die Wälzelemente (1133) zwischen sich radial einzuspannen, wobei der Vorzentrierungsbereich (510) des Schmierungsrings (500) an dem inneren kreisförmigen Ring (1134) des Entkopplungslagers (113A) radial anliegt.

7. Anordnung (700) nach einem beliebigen der Ansprüche 1 bis 5, wobei das Entkopplungslager (113A) einen inneren kreisförmigen Ring (1134), der sich in Bezug auf die Drehachse (0) zu den Wälzelementen (1133) radial innenliegend befindet, und einen äußeren kreisförmigen Ring (1131), der sich zu den Wälzelementen (1133) radial außenliegend befindet, beinhaltet, wobei der innere kreisförmige Ring (1134) und der äußere kreisförmige Ring (1131) dazu konfiguriert sind, die Wälzelemente (1133) zwischen sich radial einzuspannen, wobei der Vorzentrierungsbereich (510) des Schmierungsrings (500) an dem äußeren kreisförmigen Ring (1131) des Entkopplungslagers (113A) radial anliegt.

8. Anordnung (700) nach einem beliebigen der Ansprüche 1 bis 7, wobei das Entkopplungslager (113A) an der ersten Seitenfläche (543) radialer Ausdehnung des Schmierungsrings (500) axial anliegt.

9. Kupplungsmodul (1) mit einer Drehachse (0) und beinhaltend:
- eine Anordnung (700) nach einem beliebigen der Ansprüche 1 bis 8, wobei das Entkopplungslager (113A) der Anordnung (700) ein Stützlager (113) für das Kupplungsmodul (1) bildet, wobei das Stützlager (113) dazu konfiguriert ist, die radialen Kräfte der mindestens einen Kupplung (100, 200) aufzunehmen;
- ein System zur Betätigung 300 der mindestens einen Kupplung (100, 200), wobei das Betätigungssystem (300) es gestattet, die mindestens eine Kupplung (100, 200) in einer von folgenden Konfigurationen zu konfigurieren:
o einer sogenannten gekoppelten Konfiguration, in der die mindestens eine Drehmomentausgangsnabe (120, 220) mit der Drehmomenteingangsnabe (130) der Anordnung (700) drehgekoppelt ist; und
o einer sogenannten entkoppelten Konfiguration, in der die mindestens eine Drehmomentausgangsnabe (120, 220) von der Drehmomenteingangsnabe (130) der Anordnung (700) drehentkoppelt ist.

10. Kupplungsmodul (1) nach dem vorhergehenden Anspruch, wobei das Betätigungssystem (300) ein Gehäuse (307) beinhaltet, das einen zylindrischen Bereich (3071) umfasst, auf den die Anordnung (700) aufgebracht ist, wobei das Stützlager (113) und der Schmierungsring (500) auf den zylindrischen Bereich (3071) des Gehäuses (307) zentriert sind und an diesem radial anliegen.

11. Kupplungsmodul nach dem vorhergehenden Anspruch, wobei der zylindrische Bereich (3071) des Gehäuses (307) eine Abschrägung (3072) beinhaltet, die sich an einem vorderen axialen Ende (AV) befindet, wobei die Abschrägung (3072) eine konische Oberfläche bildet.

## Claims

1. An assembly (700) for a clutch module, said assembly (700) comprising:
- a release bearing (113A) comprising at least a plurality of rolling elements (1133) engaged between two annular rings (1131, 1134) about the axis of rotation (0) ;
- a lubricating ring (500) being delimited radially toward the inside by an interior contour (542) and, radially toward the outside, by an exterior peripheral surface, the lubricating ring (500) comprising at least one lubricating duct (520) passing through said lubricating ring (500) between said interior contour (542) and said exterior peripheral surface, and further comprising a pre-centering seating surface (510) which projects out from a first lateral face (543) of radial elongation of the lubricating ring (500), said pre-centering seating surface (510) being situated radially between the interior contour (542) and the exterior peripheral surface, wherein the pre-centering seating surface (510) bears radially against one of the annular rings (1131, 1134) of the release bearing (113A);
- at least one clutch (100, 200) configured to be able to selectively rotationally couple a torque-input hub (130) with at least one torque-output hub (120, 220), each at least one clutch (100, 200) comprising:
o first friction elements (101, 201) rotationally coupled to the torque-input hub (130);
o second friction elements (102, 202) rotationally coupled to the torque-output hub (120, 220);
**characterized in that** the release bearing (113A) comprises an interior annular ring (1134) situated radially on the inside of the rolling elements (1133) with respect to the axis of rotation (0), and an exterior annular ring (1131) situated radially on the outside of said rolling elements (1133), said pre-centering seating surface (510) of the lubricating ring (500) being inserted into an empty space in the release bearing (113A) which is situated radially between the external diameter of the interior annular ring (1134) and the internal diameter of the exterior annular ring (1131).

2. The assembly (700) as claimed in the claim 1, wherein the pre-centering seating surface (510) is cylindrical about the axis of rotation (0), an interior face (511) and/or an exterior face (512) of said pre-centering seating surface (510) being oriented parallel to said axis of rotation (0).

3. The assembly (700) as claimed in one of the preceding claims, wherein the lubricating ring (500) comprises a centering seating surface (530) which projects out axially from a second lateral face (544) of radial elongation of the lubricating ring (500), said centering seating surface (530) being situated radially between the interior contour (542) and the exterior peripheral surface of said lubricating ring (500).

4. The assembly (700) as claimed in either one of claims 2 and 3, wherein the centering seating surface (530) is symmetrical with the pre-centering seating surface (510) about an axis (E) of symmetry perpendicular to the axis of rotation (0).

5. The assembly (700) as claimed in one of the preceding claims, wherein the at least one lubricating duct (520) of the lubricating ring (500) comprises a plurality of lubricating ducts (520), said lubricating ducts (520) being angularly distributed about the axis of rotation (0), an angle between two directly adjacent lubricating ducts (520) being the same for all said lubricating ducts.

6. The assembly (700) as claimed in any one of the preceding claims, wherein the release bearing (113A) comprises an interior annular ring (1134) situated radially on the inside of the rolling elements (1133) with respect to the axis of rotation (0), and an exterior annular ring (1131) situated radially on the outside of said rolling elements (1133), said interior annular ring (1134) and said exterior annular ring (1131) being configured to constrain the rolling elements (1133) radially between them, the pre-centering seating surface (510) of the lubricating ring (500) bearing radially against the interior annular ring (1134) of said release bearing (113A).

7. The assembly (700) as claimed in any one of claims 1 to 5, wherein the release bearing (113A) comprises an interior annular ring (1134) situated radially on the inside of the rolling elements (1133) with respect to the axis of rotation (0), and an exterior annular ring (1131) situated radially on the outside of said rolling elements (1133), said interior annular ring (1134) and said exterior annular ring (1131) being configured to constrain the rolling elements (1133) radially between them, the pre-centering seating surface (510) of the lubricating ring (500) bearing radially against the exterior annular ring (1131) of said release bearing (113A).

8. The assembly (700) as claimed in any one of claims 1 to 7, wherein the release bearing (113A) bears axially against the first lateral face (543) of radial elongation of the lubricating ring (500).

9. A clutch module (1) with axis of rotation (0) and comprising:
- an assembly (700) as claimed in any one of claims 1 to 8, the release bearing (113A) of said assembly (700) forming a support bearing (113) for the clutch module (1), said support bearing (113) being configured to absorb the radial loads of the at least one clutch (100, 200) ;
- an actuating system (300) actuating the at least one clutch (100, 200), said actuating system (300) allowing the at least one clutch (100, 200) to be configured in a configuration that is comprised between:
o a configuration known as the clutch-engaged configuration in which the at least one torque-output hub (120, 220) is rotationally coupled with the torque-input hub (130) of the assembly (700); and
o a configuration known as the clutch-disengaged configuration in which the at least one torque-output hub (120, 220) is rotationally uncoupled from the torque-input hub (130) of the assembly (700).

10. The clutch module (1) as claimed in the preceding claim, wherein the actuating system (300) comprises a housing (307) comprising a cylindrical seating surface (3071) onto which the assembly (700) is push-fitted, the support bearing (113) and the lubricating ring (500) being centered on, and radially bearing against, said cylindrical seating surface (3071) of the housing (307).

11. The clutch module as claimed in the preceding claim, wherein the cylindrical seating surface (3071) of the housing (307) comprises a chamfer (3072) situated at a front axial end (AV), said chamfer (3072) forming a conically tapered surface.
